Europäisches Patentamt

European Patent Office

Office européen des brevets

(11) Publication number : **0 661 353 A2**

# (12) EUROPEAN PATENT APPLICATION

(21) Application number : **94203767.2**

(22) Date of filing : **27.12.94**

(51) Int. Cl.[6] : **C09B 67/22,** C09B 67/12, G03G 5/06

(30) Priority : **28.12.93 JP 352362/93**

(43) Date of publication of application :
**05.07.95 Bulletin 95/27**

(84) Designated Contracting States :
**DE FR GB**

(71) Applicant : **MITSUBISHI CHEMICAL CORPORATION**
**5-2 Marunouchi 2-chome**
**Chiyoda-ku, Tokyo 100 (JP)**

(72) Inventor : **Ohashi, Toyoshi, c/o Tsukuba Res. Center**
**Mitsubishi Chem. Corp.,**
**3-1 Chuo 8-chome,**
**Amimachi**
**Inashiki-gun, Ibaragi-ken (JP)**
Inventor : **Hayashi, Mariko, c/o Tsukuba Res. Center**
**Mitsubishi Chem. Corp.,**
**3-1 Chuo 8-chome,**
**Amimachi**
**Inashiki-gun, Ibaragi-ken (JP)**

(74) Representative : **Bannerman, David Gardner et al**
**Withers & Rogers**
**4 Dyer's Buildings**
**Holborn**
**London, EC1N 2JT (GB)**

(54) Method for producing phtahlocyanine photosensitive material.

(57) A phthalocyanine mixed crystal composed of at least two or more phthalocyanines selected from hydrogen phthalocyanine, copper phthalocyanine, titanyl phthalocyanine and vanadyl phthalocyanine is made to exist in water and/or an alcohol along with an organic solvent having a relative permittivity of 20 or less. The solution containing these components is optionally stirred and then allowed to stand as it is for a pre-determined period of time, whereupon the crystal structure of the phthalocyanine mixed crystal therein is converted. The phthalocyanine mixed crystal, of which the crystal structure has been converted, is washed with water or an alcohol, then filtered out and dried. The thus-obtained phthalocyanine photosensitive material is used to produce a photoreceptor, which can output digital signals at any time by digital inputting or analogical inputting. Therefore, the photoreceptor can be used in digital recording photography and also as a conventional analogical input photoreceptor to give high-quality images having sharp edges.

EP 0 661 353 A2

## Background of the Invention

### 1. Field of the Invention

The present invention relates to a method for producing a phthalocyanine photosensitive material to be used for producing digital input photoreceptors for electrophotography. In particular, it relates to a method for producing a phthalocyanine photosensitive material to be used for constructing photoreceptors satisfying various requirements for digital recording that has become much popularized in these days by practically employing the specific flow system of photocurrents in photosensitive layers thinned by the use of an insulating binder, etc.

### 2. Description of the Prior Art

Electrophotography including the Carlson process has been developed for the main purpose of analogically depicting original images. Therefore, in order to faithfully reproduce the brightness and darkness of an input light as the brightness and darkness of the corresponding toner image, it has been desired that the photoreceptor to be used for attaining the purpose is characterized in that it may pass therethrough a photocurrent linearly analogous to the input quantity of light (in terms of the logarithmic value thereof) applied thereto. In principle, therefore, photosensitive materials satisfying such a characteristic (i.e., low-gamma characteristic) have been selected as the materials for photoreceptors.

For instance, at the early stage of electrophotography, those near to simple photoconductive materials were used in photoreceptors, and thereafter selenium (Se)-based amorphous photosensitive layers as well as ZnO-bonded layers prepared to be similar to silicon (Si) amorphous layers or Se amorphous layers have become used in photoreceptors. Recently, so-called function-separated photosensitive layers made of organic semiconductors have become used in photoreceptors.

Further recently, however, electrophotographic techniques have been combined with computer or communications with the result that the printing system of a printer outputting a data from computers and facsimile systems have been increasingly converted into electrophotographic recording systems. In addition, even ordinary copying machine has become desired to be able to process image for reversal, splitting, blanking, etc. thereof. In such cases, digital data are outputted from those machines. Therefore, for electrophotographic recording systems for such cases, it is desired that the conventional analogue recording process for PPC is converted into a digital recording process.

However, as mentioned above, photosensitive materials that have heretofore been employed in the conventional electrophotography based on the analogical conception have low-gamma characteristics. Because of their characteristics, therefore, the conventional photosensitive materials are not applicable to electrophotographic devices in which the digital input signals are needed to be depicted as digital images, such as data output printers for computers, digital copying machine for digitally processing images, etc. This is because, since the photoreceptors using the conventional photosensitive materials faithfully depict even the deterioration of digital signals in the signal pathways from the computers or image processors to the electrophotographic devices or the aberration in the optical systems where writing beams are focused or originals are formed into optical images, they cannot reproduce the essential digital images to be depicted. For these reasons, it is strongly desired to provide high-gamma photosensitive materials which can be utilized in electrophotography for digital recording systems.

Given the situations, Japanese Patent Laid-Open Publication No. 1-169454 has disclosed a conception of a digital input photoreceptor. However, this has no concrete description relating to materials employable in the disclosed digital input photoreceptor. On the other hand, Japanese Patent Laid-Open Publication No. 3-37662 has disclosed a function-separated photoreceptor in which titanyl phthalocyanine is used as the material for the photosensitive layer. However, even the characteristics of the titanyl phthalocyanine disclosed therein are insufficient as the material for the photosensitive layer in the above-mentioned digital input photoreceptor because its gamma characteristic is not so high and its rest potential is high.

## Summary of the Invention

The present invention has been made, in consideration of the present situation mentioned above. The object of the present invention is to provide a method for producing a novel phthalocyanine photosensitive material which is suitably employed in digital input photoreceptors.

The method for producing a phthalocyanine photosensitive material, according to the present invention, is characterized by the co-existence of a phthalocyanine mixed crystal composed of two or more phthalocyanines selected from the group consisting of hydrogen phthalocyanine, copper phthalocyanine, titanyl phthalocyanine and vanadyl phthalocyanine, water and/or an alcohol, and an organic solvent having a relative permittivity of 20 or less. The phthalocyanine photosensitive material to be produced by the method has excellent properties as a photosensitive material for digital input photoreceptors. According to another method for producing a phthalocyanine photosensitive material of the present invention, the phthalocyanine mixed crystal mentioned above is previously swollen with water and/or an alcohol prior to putting the crystal into the organic solvent mentioned above. According to another method for producing a phthalocyanine photosensitive material of the present invention, the phthalocyanine mixed crystal mentioned above is swollen with water and/or an alcohol in such a way that it is dissolved in an acid and then dropped into water and/or an alcohol to thereby precipitate it therein. According to still another method for producing a phthalocyanine photosensitive material of the present invention, the phthalocyanine mixed crystal mentioned above is swollen with water and/or an alcohol in such a way that it is dispersed into water and/or an alcohol. According to still another method for producing a phthalocyanine photosensitive material of the present invention, the phthalocyanine mixed crystal mentioned above is stirred into water and/or an alcohol so as to make the former swollen with the latter.

## Description of the Invention

The present invention will now be explained in detail.

Hydrogen (metal-free) phthalocyanine, copper phthalocyanine, titanyl phthalocyanine and vanadyl phthalocyanine to be selected as the starting materials to construct the phthalocyanine mixed crystal for use in the present invention can be produced by any known method, for example, by the methods described in MOSER and THOMAS, "Phthalocyanine Compounds". For instance, titanyl phthalocyanine can be obtained at a high yield by a method of melting o-phthalonitrile and titanium tetrachloride under heat or heating them in the presence of an organic solvent such as $\alpha$-chloronaphthalene, etc., or by a method of heating 1,3-diiminoisoindoline and tetrabutoxytitan in an organic solvent such as N-methylpyrrolidone, etc. Metal-free (hydrogen) phthalocyanine can be produced by the same methods as those for producing titanyl phthalocyanine, without using the metal compound. Copper phthalocyanine and vanadyl phthalocyanine can be produced also by the same methods as those for producing titanyl phthalocyanine, while using copper chloride, vanadium pentoxide or the like as the metal compound. The thus-produced phthalocyanines may contain chlorine-substituted phthalocyanines.

As examples of the combination of two phthalocyanines constituting the phthalocyanine mixed crystal for use in the present invention, mentioned are a combination of metal-free (hydrogen) phthalocyanine and copper phthalocyanine, titanyl phthalocyanine or vanadyl phthalocyanine; a combination of copper phthalocyanine and titanyl phthalocyanine or vanadyl phthalocyanine; and a combination of titanyl phthalocyanine and vanadyl phthalocyanine.

The mixing ratio of the two components in these combinations is not specifically defined. For instance, one of the two may be from 0.1 to 99.9%, preferably from 5 to 95 %, more preferably from 10 to 90%. Thus defining the mixing ratio within such a suitable range, the final photosensitive material to be obtained according to the present invention may have much elevated gamma values and have much reduced rest potentials.

To produce the above-mentioned mixed crystal, for example, the following methods can be employed. Mentioned are a method comprising steps of dissolving two or more phthalocyanines in an inorganic acid such as sulfuric acid or the like or in an organic acid such as methanesulfonic acid, trifluoroacetic acid or the like followed by precipitating the intended mixed crystal in a bad solvent; a method comprising steps of heating two or more phthalocyanines in vacuum simultaneously in one heating device or separately in different heating devices at temperatures not lower than their sublimation points followed by re-aggregating the intended mixed crystal on a substrate; a method comprising steps of previously producing one or more phthalocyanines each having any of the defined atoms as the center atom followed by producing a phthalocyanine having another atom as the center atom in the presence of the thus-produced phthalocyanines; a method comprising a step of mixing two or more metal compounds to produce the intended phthalocyanine mixed crystal, etc. As examples of the bad solvent in which the phthalocyanine mixed crystal is precipitated, mentioned are water, etc.

The mixed crystal thus produced can be used as the starting material in the method of the present invention, immediately after its production, but it is desirable that the mixed crystal is used after having been stored for 20 days or more, more preferably 30 days or more, especially preferably 50 days or more, since its characteristics are much improved after storage. Specifically, the high-gamma characteristic of the final photosensitive material to be obtained from the thus-stored mixed crystal is much improved and the rest potential thereof is much lowered.

According to the method of the present invention, the phthalocyanine mixed crystal thus produced is treated with water and/or an alcohol, along with an organic solvent having a specific relative permittivity of 20 or less. By this treatment, the phthalocyanine mixed crystal is kept in contact with water and/or an alcohol, and the organic solvent. Accordingly, the crystal structure of the phthalocyanine mixed crystal is thereby converted, and the intended photosensitive material of the present invention is obtained, having an elevated high-gamma characteristic and a reduced rest potential. As the solvent to be mixed with the organic solvent in this treatment, water may be employed singly, or an alcohol may be employed singly, or water and an alcohol may be employed together.

As examples of the alcohol to be employed in this treatment, mentioned are aliphatic alcohols such as methanol, ethanol, propanol, etc.; cyclic alcohols such as cyclopentanol, cyclohexanol, etc.; and diols such as ethylene glycol, diethylene glycol, propylene glycol, etc. Of these, preferred are alcohols and diols each having from 1 to 12 carbon atoms, and more preferred are alcohols and diols each having from 1 to 8 carbon atoms. Suitably selecting the alcohol to be used in this treatment, the final photosensitive material to be obtained by the present invention may have a much elevated gamma value and a much lowered rest potential.

The amount of water and that of the alcohol to be used for this treatment may be adjusted in broad ranges. This is because the concentrations of water and/or an alcohol and an organic solvent co-existing in the vicinity of the phthalocyanine mixed crystal formed are important but the presence or absence of water and/or an alcohol in the other spaces is out of the problem. Therefore, if the phthalocyanine mixed crystal is swollen with water and/or an alcohol prior to the treatment for making water and/or an alcohol and an organic solvent present adjacent to the phthalocyanine mixed crystal, it is unnecessary to further add water and/or an alcohol to the thus-swollen crystal since the crystal already contains water and/or an alcohol. It is preferable to previously swell the phthalocyanine mixed crystal with water and/or an alcohol so as to favorably convert the crystal structure of the crystal. To swell the phthalocyanine mixed crystal with water, for example, the crystal may be dissolved in sulfuric acid and then dropped into water, thereby precipitating the crystal in water as its wet paste. Apart from this, the phthalocyanine mixed crystal may be dispersed in water as its wet paste, using a homomixer, a paint mixer, a ball mill, a sand mill, etc. The same shall apply to the case of swelling the phthalocyanine mixed crystal with an alcohol. In the latter case, an alcohol is used in place of water to swell the phthalocyanine mixed crystal therewith. Where two or more phthalocyanines are dissolved in an acid and the resulting phthalocyanine mixed crystal is precipitated in water, the crystal thus precipitated in water as its wet paste may directly be used in the method of the present invention. Needless-to-say, the same effect as that mentioned above can be attained only when water or an alcohol is added to an organic solvent and a powder of the phthalocyanine mixed crystal is added thereto, without employing the above-mentioned swelling treatment. In such a case, however, a long period of time of about 24 to 120 hours is needed so as to complete the intended co-existing treatment.

It is desirable that the ratio of the phthalocyanine mixed crystal to water and/or an alcohol in the co-existing system where the co-existing treatment is practiced is, in general, approximately from 1/1 to 1/500, preferably approximately from 1/3 to 1/200, more preferably approximately from 1/5 to 1/100, by weight. Thus suitably defining the co-existing ratio within the range, the intended final photosensitive material can have a much elevated gamma value and a much reduced rest potential.

The organic solvent to be employed in the present invention has a relative permittivity of 20 or less, preferably from 1 to 15, more preferably 2 to 12. If it has a relative permittivity of more than 20, its polarity is too high so that crystals inhibiting the intended property of the mixed crystal will grow and the desired mixed crystal cannot be obtained. Thus suitably selecting the organic solvent having the defined relative permittivity, it is possible to obtain the intended final photosensitive material having a much elevated gamma value and a much reduced rest potential.

As the organic solvent having a relative permittivity, for example, employable in the present invention are the following substances. The number shown in the parenthesis after each substance indicates the relative pemittivity of the substance at 20°C. There are mentioned aliphatic hydrocarbons having from 4 to 12 carbon atoms, preferably-from 5 to 8 carbon atoms (1.7 to 2.0); alicyclic hydrocarbons having from 4 to 12 carbon atoms, preferably from 5 to 8 carbon atoms (2.0 to 2.5); aromatic hydrocarbons such as benzene (2.3), toluene (2.4), xylene (2.3 to 2.7), ethylbenzene (2.6), etc.; halogenated aliphatic hydrocarbons such as chloropentane (6.6), butyl chloride (7.4), propyl chloride (7.7), tetrachloroethane (2.3), dichloroethane (10.7), carbon tetrachloride (2.2), chloroform (4.8), methylene chloride (7.8), butyl bromide (7.1), propyl bromide (8.1), ethyl bromide (9.4), methyl bromide (9.8), etc.; halogenated aromatic hydrocarbons such as chlorobenzene (5.7), dichlorobenzene (2.4 to 9.9), bromobenzene (5.4), dibromobenzene (2.6 to 7.4), etc.; ketones such as methyl ethyl ketone (18.5), pentanone (15.4), hexanone (16.4), methylcyclohexanone (14.0), cyclohexanone (18.3), dipropyl ketone (12.6), etc.; ethers such as dibutyl ether (3.1), dihexyl ether, ethylene glycol monomethyl ether (16.0), ethylene glycol dimethyl ether (5.5), tetrahydrofuran (7.4), dioxane (2.2), etc.; esters such as methyl acetate (6.7), ethyl acetate (6.0), propyl acetate (6.0), butyl acetate (5.0), methyl propionate (5.5), ethyl propionate (5.6), propyl propionate, butyl propionate (4.8), diethyl oxalate (1.8), diethyl malonate (7.9), etc.; amines such as dipropylamine (3.1), butylamine (4.9), dibutylamine (3.0), pentylamine, ethylhexylamine, cyclohexylamine (4.7), dicyclohexylamine, aniline (7.1), toluidine (5.0 to 6.3), piperidine (5.8), pyridine (12.3), morpholine (7.4), ethylamine (7.0), etc.

Of these, preferred are toluene (2.4), xylenes (2.3 to 2.7), chlorobenzene (5.7), dichlorobenzene (2.4 to 9.9), chloroform (4.8), methylene chloride (7.8), dichloroethane (10.7), tetrahydrofuran (7.4), dipropyl ketone (12.6), ethylamine (7.0), and ethyl acetate (6.0); and especially preferred are toluene (2.4), chlorobenzene (5.7), dichlorobenzene (2.4 to 9.9), dichloroethane (10.7), tetrahydrofuran (7.4), ethylamine (7.0), and ethyl acetate (6.0).

The amount of the organic solvent to be added may be approximately from 0.5 to 1000, preferably approximately from 1 to 800, more preferably approximately from 5 to 300, by weight, relative to the mixed crystal of being 1 (one). Thus suitably defining the amount of the organic solvent to be added, it is possible to obtain the intended final photosensitive material having a much elevated gamma value and a much reduced rest potential.

In the co-existing system in which the phthalocyanine mixed crystal is in water and/or an alcohol along with an organic solvent, if water and/or the alcohol, and the organic solvent form two separate phases, it is desired to stir the system. Even though they form a uniform single phase, the system is generally stirred so as to reduce the treating time. To stir the system, in general, ordinary stirring devices may be employed. In addition, also employable are a homo-mixer, a paint mixer, a ball mill, a sand mill, an attritor, a disperser, an ultrasonic disperser, etc.

Where the treating temperatures at which the phthalocyanine mixed crystal is made to exist in water and/or an alcohol along with an organic solvent are defined within the range between 0°C and the boiling point of the solvent used, generally between room temperature and 90°C, it is possible to obtain the intended final photosensitive material having a much elevated gamma value and a much reduced rest potential.

Where the treating time for which the phthalocyanine mixed crystal is made to exist in water and/or an alcohol along with an organic solvent are defined within the range between 1 minute and 120 hours or so, preferably 5 minutes and 50 hours or so, more preferably 10 minutes and 24 hours or so, it is possible to obtain the intended final photosensitive material having a much elevated gamma value and a much reduced rest potential.

The phthalocyanine photosensitive material thus produced by the contact treatment with an organic solvent is filtered out, dried and isolated.

Where the phthalocyanine photosensitive material of the present invention is used in an electrophotographic photoreceptor, the phthalocyanine photosensitive material produced by the methods mentioned above is stirred along with a binder resin, a solvent, etc. in a kneading and dispersing machine such as a ball mill, an attritor, etc., whereby the material is uniformly dispersed in these binder resin, solvent, etc. The resulting dispersion is coated on an electroconductive support to form a photosensitive layer thereon. More precisely, the ratio by weight of the binder resin to the phthalocyanine photosensitive material, when these are blended, is controlled to about 1/1 to 10/1. The blend comprising a phthalocyanine photosensitive material and a binder resin is coated on an electroconductive support, for example, an aluminum plate that is generally used in ordinary electrophotographic photoreceptors, or a paper or plastic support that has been made electroconductive, to thereby form a photosensitive layer on the support. Before coating, if desired, a solvent such as toluene or the like is added to the photosensitive material blend so as to suitably adjust the viscosity of the blend. Then, the resulting blend is coated on a support such as that mentioned above by various coating methods using an air doctor coater, a plate coater, a rod coater, a reverse coater, a spray coater, a hot coater, a squeeze coater, a gravure coater, etc., to thereby form a photosensitive film thereon. After thus coated, the layer is suitably dried until it may have a sufficient charging potential as a photoconductive layer.

As examples of the binder resin, mentioned are binder resins having an specific resistance of $10^7$ $\Omega$cm or more, such as melamine resins, epoxy resins, silicon resins, polyurethane resins, polyester resins, alkyd resins, acrylic resins, xylene resins, vinyl chloride-vinyl acetate copolymer resins, polycarbonate resins, cellulose derivatives, etc., as well as binder resins of polyvinyl carbazole, etc.

In the photoreceptor produced according to the above-mentioned means using the phthalocyanine photosensitive material of the present invention (this is hereinafter referred to as "photoreceptor having the photosensitive material of the present invention"), the ratio by weight of the resin to the photoconductive material may be 1/1 or more. Thus, the amount of the resin in this photoreceptor is larger than that in a conventional photoreceptor having zinc oxide in which the ratio by weight of the resin to the photoconductive material is 0.2/1. Therefore, it is possible to realize a photoreceptor of which the coated photosensitive film has a high physical strength and is satisfactorily flexible. The photoreceptor produced in the manner as mentioned above has various practical advantages in that the adhesiveness between the coated photosensitive film and the support is large, that the film has good moisture-proofness, that the properties of the film do not vary with the lapse of time, that the film has few problems on its toxicity, that the production of the photoreceptor is easy and that the production costs are low.

Since the photoreceptor having the photosensitive material of the present invention, that is produced in the manner as mentioned above, is characterized by the specific flow of a photocurrent passing therethrough, being different from photoreceptors having conventional photosensitive materials, it can be used as a digital input photoreceptor. In photoreceptors having conventional photosensitive materials, as mentioned above, a photocurrent of an amount linearly corresponding to the input quantity of light (in terms of the logarithmic value thereof) applied thereto passes therethrough. As opposed to these, in the photoreceptor having the photosensitive material of the present invention, no photocurrent flows or only an extremely small amount of a photocurrent flows therethrough before the input quantity of light applied thereto reaches a pre-determined amount, and immediately after the input quantity of light has reached the pre-determined amount, a photocurrent suddenly begins to flow through the photoreceptor. In digital data recording, the image is formed, by the output dot area. Therefore, as the photosensitive characteristics of the photoreceptor to be used in this recording system, the above-mentioned ones are preferred. This is because aberration is inevitable in the optical system for scanning and focusing laser beams, if any high-degree correction for compensating the aberration is not made in the system. Therefore, even if the laser beams applied to the photoreceptor are correctly modulated on the basis of the digital data, it is inevitable, in principle, that the spots themselves of the laser beams as projected onto the photoreceptor have a significant distribution due to the change in the quantity of light and have halos therearound. For these reasons, in the photoreceptors having conventional photosensitive materials, in which the change in the light energy (input quantity of light) applied thereto is stepwise taken up, the densities of the dot patterns formed are varied even by the minor variation in the quantity of light, and the edges of the dot patterns are varied by minor blurs of the spots. The variations in the dot patterns mentioned above are referred to as noises, causing fog. The photoreceptor having the photosensitive material of the present invention is sensitive to light, while neglecting such a slight variation in the quantity of light applied thereto and such a slight blur of the spots formed thereon. Therefore, since the phthalocyanine photosensitive material of the present invention can cancel the variation in the dot patterns formed, being different from conventional photosensitive materials, it is advantageous as a photosensitive material in digital input photoreceptors.

## Description of the Preferred Embodiments

Now, the preferred embodiments of the method for producing phthalocyanine photosensitive materials of the present invention will be described below, along with examples of producing phthalocyanines and phthalocyanine mixed crystals to be used therein.

### 1. Examples of Producing Phthalocyanines:

First, examples of producing phthalocyanines are mentioned.

### 1.1 Production Example 1:

Production of Titanyl Phthalocyanine:

58 g of 1,3-diiminoisoindoline and 51 g of tetrabutoxytitanium were reacted in 300 ml of $\alpha$-chloronaphthalene at 210°C for 5 hours. Afterwards, the reaction product was washed with $\alpha$-chloronaphthalene and dimethylformamide (DMF) in order. Next, the thus-washed substance was further washed with hot DMF at 150°C, hot water at 80°C and methanol in order. Last, the thus-washed substance was dried at 60°C. After this treatment, 51 g of titanyl phthalocyanine were obtained.

### 1.2 Production Example 2:

Production of Metal-free (Hydrogen) Phthalocyanine:

58 g of 1,3-diiminoisoindoline were treated in 300 ml of $\alpha$-chloronaphthalene at 210°C for 5 hours. Afterwards, the resulting product was washed with $\alpha$-chloronaphthalene and dimethylformamide (DMF) in order. Next, the thus-washed substance was further washed with hot DMF at 150°C, hot water at 80°C and methanol in order. Last, the thus-washed substance was dried at 60°C. After this treatment, 42 g of metal-free (hydrogen) phthalocyanine were obtained.

### 1.3 Production Example 3:

Production of Copper Phthalocyanine:

54 g of phthalic anhydride, 93 g of urea, 15.3 g of cupric chloride (anhydride) and 0.6 g of ammonium molybdate were reacted in 450 ml of nitrobenzene at 190° C for 5 hours. Afterwards, the reaction product was washed with nitrobenzene and methanol in order. Next, the thus-washed substance was boiled in 1000 ml of aqueous solution of 1 N hydrochloric acid for 1 hour and then immediately filtered out while hot. The substance thus filtered out was washed with plenty of water until the filtrate became neutral. Next, the thus-washed substance was further boiled in 1000 ml of aqueous solution of 1 N sodium hydroxide acid for 1 hour and then immediately filtered out while hot. Afterwards, the substance thus filtered out was washed with plenty of water until the filtrate became neutral. Last, the thus-washed substance was dried at 120°C. After this treatment, 42 g of copper phthalocyanine were obtained.

### 1.4 Production Example 4:

Production of Vanadyl Phthalocyanine:

58 g of 1,3-diiminoisoindoline and 28 g of vanadium pentoxide were reacted in 300 ml of $\alpha$-chloronaphthalene at 210°C for 5 hours. Afterwards, the reaction product was washed with $\alpha$-chloronaphthalene and dimethylformamide (DMF) in order. Next, the thus-washed substance was further washed with hot DMF at 150°C, hot water at 80°C and methanol in order. Last, the thus-washed substance was dried at 60°C. After this treatment, 42 g of vanadyl phthalocyanine were obtained.

## 2. Examples of Producing Phthalocyanine Mixed Crystals:

Next, examples of producing phthalocyanine mixed crystals are mentioned.

### 2.1 Production Example 1:

10 g of copper phthalocyanine and 9 g of metal-free (hydrogen) phthalocyanine were dissolved in 420 g of sulfuric acid. The resulting acid solution was dropped into ice-water composed of 800 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 18 g of phthalocyanine mixed crystal 1 were obtained. The molar ratio of the constitutive phthalocyanines in this phthalocyanine mixed crystal 1 was 5/5 as copper phthalocyanine/metal-free phthalocyanine.

### 2.2 Production Example 2:

16 g of titanyl phthalocyanine and 4 g of metal-free (hydrogen) phthalocyanine were dissolved in 840 g of sulfuric acid. The resulting acid solution was dropped into ice-water composed of 1600 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 19 g of phthalocyanine mixed crystal 2 were obtained. The molar ratio of the constitutive phthalocyanines in this phthalocyanine mixed crystal 2 was 8/2 as titanyl phthalocyanine/metal-free phthalocyanine.

### 2.3 Production Example 3:

9 g of titanyl phthalocyanine and 12 g of metal-free (hydrogen) phthalocyanine were dissolved in 840 g of sulfuric acid. The resulting acid solution was dropped into ice-water composed of 1600 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 19 g of phthalocyanine mixed crystal 3 were obtained. The molar ratio of the constitutive phthalocyanines in this phthalocyanine mixed crystal 3 was 4/6 as titanyl phthalocyanine/metal-free phthalocyanine.

### 2.4 Production Example 4:

16 g of titanyl phthalocyanine and 4 g of metal-free (hydrogen) phthalocyanine were dissolved in 620 g of trifluoroacetic acid. The resulting acid solution was dropped into ice-water composed of 1200 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 19 g of phthalocyanine mixed crystal 4 were obtained. The molar ratio of the constitutive phthalocyanines in this phthalocyanine mixed crystal 4 was 8/2 as titanyl phthalocyanine/metal-free phthalocyanine.

### 2.5 Production Example 5:

16 g of titanyl phthalocyanine and 4 g of vanadyl phthalocyanine were dissolved in 840 g of sulfuric acid. The resulting acid solution was dropped into ice-water composed of 1600 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 19 g of phthalocyanine mixed crystal 5 were obtained. The molar ratio of the constitutive phthalocyanines in this phthalocyanine mixed crystal 5 was 8/2 as titanyl phthalocyanine/vanadyl phthalocyanine.

### 2.6 Production Example 6:

8 g of copper phthalocyanine and 8 g of vanadyl phthalocyanine were dissolved in 840 g of sulfuric acid. The resulting acid solution was dropped into ice-water composed of 1600 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 14 g of phthalocyanine mixed crystal 6 were obtained. The molar ratio of the constitutive phthalocyanines in this phthalocyanine mixed crystal 6 was 5/5 as copper phthalocyanine/vanadyl phthalocyanine.

### 2.7 Production Example 7:

29 g of 1,3-diiminoisoindoline, 13 g of tetrabutoxy titanium and 7 g of vanadium pentoxide were reacted in 150 ml of $\alpha$-chloronaphthalene at 210°C for 4 hours. Next, the reaction product was washed with $\alpha$-chloronaphthalene and dimethylformamide (DMF) in order. Afterwards, the thus-washed substance was further washed with hot DMF at 150°C, hot water at 80°C and methanol in order. Last, the thus-washed substance was dried at 60°C. After this treatment, 23 g of phthalocyanine mixed crystal 7 were obtained. The molar ratio of the constitutive phthalocyanines in this phthalocyanine mixed crystal 7 was 5/5 as titanyl phthalocyanine/vanadyl phthalocyanine.

### 2.8 Production Example 8:

12 g of titanyl phthalocyanine, 4 g of vanadyl phthalocyanine and 4 g of metal-free (hydrogen) phthalocyanine were dissolved in 840 g of sulfuric acid. The resulting acid solution was dropped into ice-water composed of 1600 ml of water and 2400 g of ice, thereby forming a re-precipitate. Afterwards, the re-precipitate was filtered out and washed with plenty of water until the filtrate became neutral. Last, the thus-washed substance was dried at 110°C. After this treatment, 19 g of phthalocyanine mixed crystal 8 were obtained. The molar ratio of the constitutive phthalocyanines in this phthalocyanine mixed crystal 8 was 6/2/2 as titanyl phthalocyanine/vanadyl phthalocyanine/metal-free phthalocyanine.

## 3. Example of producing phtalocyanine:

Example of producing phthalocyanine photosensitive materials according to the present invention are mentioned below.

### 3.1 Example 1:

2 g of phthalocyanine mixed crystal 1 obtained in Production Example 1 of the foregoing item 2.1 were dissolved in 50 ml of sulfuric acid at 0°C. The resulting acid solution was dropped into 500 ml of water at 0°C, thereby precipitating the mixed crystal.

Afterwards, the resulting precipitate was filtered out and washed with plenty of water until the filtrate became neutral. Thus, 18 g of a wet paste of phthalocyanine mixed crystal 1 were obtained.

Next, the wet paste was poured into 200 ml of dichloroethane (having a relative permittivity of 10.7) kept at 25°C, by which phthalocyanine mixed crystal 1 was made to exist in water along with dichloroethane. Then, the dichloroethane solution containing the wet paste therein was mechanically stirred to continue this treatment for 3 hours.

After having carried out this treatment for 3 hours, the phthalocyanine mixed crystal existing in the solution was washed with methanol and then filtered out. Last, the phthalocyanine mixed crystal was dried at 60°C to obtain phthalocyanine photosensitive material 1.

### 3.2 Example 2:

2 g of phthalocyanine mixed crystal 2 obtained in Production Example 2 of the foregoing item 2.2 were dissolved in 50 ml of sulfuric acid at 0°C. The resulting acid solution was dropped into 500 ml of water at 0°C, thereby precipitating the mixed crystal.

Afterwards, the resulting precipitate was filtered out and washed with plenty of water until the filtrate became neutral. Thus, 17 g of a wet paste of phthalocyanine mixed crystal 2 were obtained.

Next, the wet paste was poured into 200 ml of dichloroethane kept at 25°C, by which phthalocyanine mixed crystal 2 was made to exist in water along with dichloroethane. Then, the dichloroethane solution containing the wet paste therein was mechanically stirred to continue this treatment for 2 hours.

After having carried out this treatment for 2 hours, the phthalocyanine mixed crystal existing in the solution was washed with methanol and then filtered out. Last, the phthalocyanine mixed crystal was dried at 60°C to obtain phthalocyanine photosensitive material 2.

### 3.3 Example 3:

2 g of phthalocyanine mixed crystal 2 obtained in Production Example 2 of the foregoing item 2.2 were poured into 100 ml of water at 25°C. Next, this water into which the phthalocyanine mixed crystal 2 had been poured was set in a paint shaker (Paint Conditioner; trade name by Red Devil Co.) and the crystal was dispersed therein over a period of 5 hours. Thus, 14 g of a wet paste of phthalocyanine mixed crystal 2 were obtained.

Next, the wet paste was poured into 200 ml of tetrahydrofuran (THF) (having a relative permittivity of 7.4) kept at 25°C, by which phthalocyanine mixed crystal 2 was made to exist in water along with tetrahydrofuran. Then, the tetrahydrofuran solution containing the wet paste therein was mechanically stirred to continue this treatment for 3 hours.

After having carried out this treatment for 3 hours, the phthalocyanine mixed crystal existing in the solution was washed with methanol and then filtered out. Last, the phthalocyanine mixed crystal was dried at 60°C to obtain phthalocyanine photosensitive material 3.

### 3.4 Example 4:

2 g of phthalocyanine mixed crystal 2 obtained in Production Example 2 of the foregoing item 2.2 were poured into 100 ml of water at 25°C. Next, this water into which the phthalocyanine mixed crystal 2 had been poured was mechanically stirred to disperse the crystal therein over a period of 50 hours. Thus, 12 g of a wet paste of phthalocyanine mixed crystal 2 were obtained.

Next, the wet paste was poured into 200 ml of o-dichlorobenzene (having a relative permittivity of 9.9) kept at 60°C, by which phthalocyanine mixed crystal 2 was made to exist in water along with o-dichlorobenzene. Then, the o-dichlorobenzene solution containing the wet paste therein was mechanically stirred to continue this treatment for 6 hours.

After having carried out this treatment for 6 hours, the phthalocyanine mixed crystal existing in the solution was washed with methanol and then filtered out. Last, the phthalocyanine mixed crystal was dried at 60°C to obtain phthalocyanine photosensitive material 4.

### 3.5 Example 5:

2 g of phthalocyanine mixed crystal 2 obtained in Production Example 2 of the foregoing item 2.2 were poured into 200 ml of dichlorobenzene kept at 80°C, along with 100 ml of water at 80°C, by which phthalocyanine mixed crystal 2 was made to exist in water along with dichlorobenzene. Then, the dichlorobenzene solution containing therein a wet paste composed of phthalocyanine mixed crystal 2 and water was mechanically stirred to continue this treatment for 48 hours.

After having carried out this treatment for 48 hours, the phthalocyanine mixed crystal existing in the solution was washed with methanol and then filtered out. Last, the phthalocyanine mixed crystal was dried at 60°C to obtain phthalocyanine photosensitive material 5.

### 3.6 Example 6:

2 g of phthalocyanine mixed crystal 2 obtained in Production Example 2 of the foregoing item 2.2 were dissolved in 50 ml of sulfuric acid at 0°C. Next, the resulting acid solution was dropped into 500 ml of ethanol at 0°C, thereby precipitating the mixed crystal. Afterwards, the resulting precipitate was filtered out and washed with plenty of ethanol until the filtrate became neutral. Thus, 15 g of a wet paste of phthalocyanine mixed crystal 2 were obtained.

Next, this wet paste was poured into 200 ml of dichloroethane kept at 25°C, by which phthalocyanine mixed crystal 2 was made to exist in the alcohol along with dichloroethane. Then, the dichloroethane solution containing the wet paste therein was mechanically stirred to continue this treatment for 5 hours.

After having carried out this treatment for 5 hours, the phthalocyanine mixed crystal existing in the solution was washed with methanol and then filtered out. Last, the phthalocyanine mixed crystal was dried at 60°C to obtain phthalocyanine photosensitive material 6.

### 3.7 Example 7:

2 g of phthalocyanine mixed crystal 3 obtained in Production Example 3 of the foregoing item 2.3 were dissolved in 50 ml of sulfuric acid at 0°C. Next, the resulting acid solution was dropped into 500 ml of water at 0°C, thereby precipitating the mixed crystal. Afterwards, the resulting precipitate was washed with plenty of water until the filtrate became neutral. Thus, 17 g of a wet paste of phthalocyanine mixed crystal 3 were obtained.

Next, this wet paste was poured into 200 ml of tetrahydrofuran (THF) kept at 25°C, by which phthalocyanine mixed crystal 3 was made to exist in water along with tetrahydrofuran. Then, the tetrahydrofuran solution containing the wet paste therein was set in a ball mill (LP-4; trade name by Ito Seisaku-sho Co.) and milled therein to continue this treatment for 2 hours.

After having carried out this treatment for 2 hours, the phthalocyanine mixed crystal existing in the solution was washed with methanol and then filtered out. Last, the phthalocyanine mixed crystal was dried at 60°C to obtain phthalocyanine photosensitive material 7.

### 3.8 Example 8:

2 g of phthalocyanine mixed crystal 4 obtained in Production Example 4 of the foregoing item 2.4 were dissolved in 50 ml of sulfuric acid at 0°C. Next, the resulting acid solution was dropped into 500 ml of water at 0°C, thereby precipitating the mixed crystal.

Afterwards, the resulting precipitate was filtered out and washed with plenty of water until the filtrate became neutral. Thus, 18 g of a wet paste of phthalocyanine mixed crystal 4 were obtained.

Next, this wet paste was poured into 200 ml of chlorobenzene (having a relative permittivity of 5.7) kept at 25°C, by which phthalocyanine mixed crystal 4 was made to exist in water along with chlorobenzene. Then, the chlorobenzene solution containing the wet paste therein was mechanically stirred to continue this treatment for 3 hours.

After having carried out this treatment for 3 hours, the phthalocyanine mixed crystal existing in the solution was washed with methanol and then filtered out. Last, the phthalocyanine mixed crystal was dried at 60°C to obtain phthalocyanine photosensitive material 8.

### 3.9 Example 9:

2 g of phthalocyanine mixed crystal 4 obtained in Production Example 4 of the foregoing item 2.4 were put into 100 ml of water at 25°C. Next, this water into which phthalocyanine mixed crystal 4 had been poured was set in a paint shaker and the crystal was dispersed therein over a period of 5 hours. Thus, 12 g of a wet paste of phthalocyanine mixed crystal 4 were obtained.

Next, the wet paste was poured into 200 ml of chlorobenzene kept at 25°C, by which phthalocyanine mixed crystal 4 was made to exist in water along with chlorobenzene. Then, the chlorobenzene solution containing the wet paste therein was set in a ball mill and stirred therein to continue this treatment for 2 hours.

After having carried out this treatment for 2 hours, the phthalocyanine mixed crystal existing in the solution was washed with methanol and then filtered out. Last, the phthalocyanine mixed crystal was dried at 60°C to obtain phthalocyanine photosensitive material 9.

### 3.10 Example 10:

2 g of phthalocyanine mixed crystal 4 obtained in Production Example 4 of the foregoing item 2.4 were put into 100 ml of methanol at 25°C. Next, this methanol into which phthalocyanine mixed crystal 4 had been poured was set in a paint shaker and the crystal was dispersed therein over a period of 5 hours. Thus, 12 g of a wet paste of phthalocyanine mixed crystal 4 were obtained.

Next, the wet paste was poured into 200 ml of chlorobenzene kept at 25°C, by which phthalocyanine mixed crystal 4 was made to exist in the alcohol along with chlorobenzene. Then, the chlorobenzene solution containing the wet paste therein was mechanically stirred to continue this treatment for 6 hours.

After having carried out this treatment for 6 hours, the phthalocyanine mixed crystal existing in the solution was washed with methanol and then filtered out. Last, the phthalocyanine mixed crystal was dried at 60°C to obtain phthalocyanine photosensitive material 10.

### 3.11 Example 11:

2 g of phthalocyanine mixed crystal 5 obtained in Production Example 5 of the foregoing item 2.5 were dissolved in 50 ml of sulfuric acid at 0°C. Next, the resulting acid solution was dropped into 500 ml of water at 0°C, thereby precipitating the mixed crystal. Afterwards, the resulting precipitate was filtered out and washed with plenty of water until the filtrate became neutral. Thus, 14 g of a wet paste of phthalocyanine mixed crystal 5 were obtained.

Next, the wet paste was put into 200 ml of toluene (having a relative permittivity of 2.4) kept at 40°C, by which phthalocyanine mixed crystal 5 was made to exist in water along with toluene. Then, the toluene solution containing the wet paste therein was mechanically stirred to continue this treatment for 7 hours.

After having carried out this treatment for 7 hours, the phthalocyanine mixed crystal existing in the solution was washed with methanol and then filtered out. Last, the phthalocyanine mixed crystal was dried at 60°C to obtain phthalocyanine photosensitive material 11.

### 3.12 Example 12:

2 g of phthalocyanine mixed crystal 6 obtained in Production Example 6 of the foregoing item 2.6 were dissolved in 50 ml of sulfuric acid at 0°C. Next, the resulting acid solution was dropped into 500 ml of water at 0°C, thereby precipitating the mixed crystal. Afterwards, the resulting precipitate was filtered out and washed with plenty of water until the filtrate became neutral. Thus, 18 g of a wet paste of phthalocyanine mixed crystal 6 were obtained.

Next, the wet paste was put into 200 ml of dipropyl ketone (having a relative permittivity of 12.6) kept at 40°C, by which phthalocyanine mixed crystal 6 was made to exist in water along with dipropyl ketone. Then, the dipropyl ketone solution containing the wet paste therein was mechanically stirred to continue this treatment for 8 hours.

After having carried out this treatment for 8 hours, the phthalocyanine mixed crystal existing in the solution was washed with methanol and then filtered out. Last, the phthalocyanine mixed crystal was dried at 60°C to obtain phthalocyanine photosensitive material 12.

### 3.13 Example 13:

2 g of phthalocyanine mixed crystal 7 obtained in Production Example 7 of the foregoing item 2.7 were dissolved in 50 ml of sulfuric acid at 0°C. Next, the resulting acid solution was dropped into 500 ml of water at 0°C, thereby precipitating the mixed crystal. Afterwards, the resulting precipitate was filtered out and washed with plenty of water until the filtrate became neutral. Thus, 17 g of a wet paste of phthalocyanine mixed crystal 7 were obtained.

Next, the wet paste was put into 200 ml of ethylamine (having a relative permittivity of 7.0) kept at 25°C, by which phthalocyanine mixed crystal 7 was made to exist in water along with ethylamine. Then, the ethylamine solution containing the wet paste therein was mechanically stirred to continue this treatment for 4 hours.

After having carried out this treatment for 4 hours, the phthalocyanine mixed crystal existing in the solution was washed with methanol and then filtered out. Last, the phthalocyanine mixed crystal was dried at 60°C to obtain phthalocyanine photosensitive material 13.

### 3.14 Example 14:

2 g of phthalocyanine mixed crystal 8 obtained in Production Example 8 of the foregoing item 2.8 were dissolved in 50 ml of sulfuric acid at 0°C. Next, the resulting acid solution was dropped into 500 ml of water at 0°C, thereby precipitating the mixed crystal. Afterwards, the resulting precipitate was filtered out and washed with plenty of water until the filtrate became neutral. Thus, 17 g of a wet paste of phthalocyanine mixed crystal 8 were obtained.

Next, the wet paste was put into 200 ml of dichloroethane kept at 25°C, by which phthalocyanine mixed crystal 8 was made to exist in water along with dichloroethane. Then, the dichloroethane solution containing the wet paste therein was mechanically stirred to continue this treatment for 4 hours.

After having carried out this treatment for 4 hours, the phthalocyanine mixed crystal existing in the solution was washed with methanol and then filtered out. Last, the phthalocyanine mixed crystal was dried at 60°C to obtain phthalocyanine photosensitive material 14.

### 3.15 Example 15:

2 g of phthalocyanine mixed crystal 8 obtained in Production Example 8 of the foregoing item 2.8 were put into 100 ml of ethylene glycol at 25°C. Next, this ethylene glycol into which phthalocyanine mixed crystal 8 had been poured was set in a paint shaker and the crystal was dispersed therein over a period of 5 hours. Thus, 24 g of a wet paste of phthalocyanine mixed crystal 8 were obtained.

Next, the wet paste was poured into 200 ml of dichloroethane kept at 50°C, by which phthalocyanine mixed crystal 8 was made to exist in the alcohol along with dichloroethane. Then, the dichloroethane solution containing the wet paste therein was mechanically stirred to continue this treatment for 8 hours.

After having carried out this treatment for 8 hours, the phthalocyanine mixed crystal existing in the solution was washed with methanol and then filtered out. Last, the phthalocyanine mixed crystal was dried at 60°C to obtain phthalocyanine photosensitive material 15.

The contents of the above-mentioned examples are summarized in Table 1 below.

## Table 1

| Example | Mixed crystal | Water (1) | Alcohol (1) | Organic solvent (2) | Temperature (°C) | Time (h) |
|---|---|---|---|---|---|---|
| 1 | 1 | A | | a, Dichloroethane | 25 | 3 |
| 2 | 2 | A | | a, Dichloroethane | 25 | 2 |
| 3 | 2 | B | | a, THF | 25 | 3 |
| 4 | 2 | C | | a, Dichlorobenzene | 60 | 6 |
| 5 | 2 | D | | a, Dichlorobenzene | 80 | 48 |
| 6 | 2 | | A Ethanol | a, Dichloroethane | 25 | 5 |
| 7 | 3 | A | | B, THF | 25 | 2 |
| 8 | 4 | A | | a, Chlorobenzene | 25 | 3 |
| 9 | 4 | B | | b, Chlorobenzene | 25 | 2 |
| 10 | 4 | | B Methanol | a, Chlorobenzene | 25 | 6 |
| 11 | 5 | A | | a, Toluene | 40 | 7 |
| 12 | 6 | A | | a, Dipropyl Ketone | 40 | 8 |
| 13 | 7 | A | | a, Ethylamine | 25 | 4 |
| 14 | 8 | A | | a, Dichloroethane | 25 | 4 |
| 15 | 8 | | B Ethylene Glycol | a, Dichloroethane | 50 | 8 |

Regarding the addition of water or an alcohol to the mixed crystal, the mixed crystal was dissolved in sulfuric acid and dropped into water or an alcohol, thereby precipitating the crystal as its wet paste in Method A of the Table 1; the mixed crystal was dispersed in water or an alcohol to form its wet paste, using a paint shaker, in Method B of the Table 1 ; the mixed crystal was mechanically stirred in water or an alcohol for 50 hours to disperse the former in the latter, thereby forming its wet paste in Method C of the Table 1; and the mixed crystal was treated with an organic solvent while added water or an alcohol thereto in Method D of the Table 1. Regarding the treatment of the mixed crystal with an organic solvent, mechanical stirring was effected in Method a of the Table 1; and ball milling was effected in Method b of the Table 1.

## 4. Comparative Examples:

Comparative Examples of producing comparative phthalocyanine photosensitive materials, which are used hereinafter for assessing the phthalocyanine photosensitive materials prepared in the foregoing examples, are mentioned below.

### 4.1 Comparative Example 1:

Comparative Example 1 is different from the Example 2 only in that the starting material is titanyl phthalocyanine (TiOPc) alone but not the phthalocyanine mixed crystal.

In Comparative Example 1, 2 g of titanyl phthalocyanine were dissolved in 50 ml of sulfuric acid at 0°C. Next, the resulting acid solution was dropped into 500 ml of water at 0°C, thereby forming a precipitate. Afterwards, the precipitate was filtered out and washed with plenty of water until the filtrate became neutral. Thus, 14 g of a wet paste of titanyl phthalocyanine were obtained.

Next, the wet paste was put into 200 ml of dichloroethane kept at 25°C, by which the titanyl phthalocyanine was made to exist in water along with dichloroethane. Then, the dichloroethane solution containing the wet paste therein was mechanically stirred to continue this treatment for 2 hours.

After having carried out this treatment for 2 hours, the titanyl phthalocyanine existing in the solution was washed with methanol and then filtered out. Last, the titanyl phthalocyanine was dried at 60°C to obtain comparative phthalocyanine photosensitive material 1.

### 4.2 Comparative Example 2:

Comparative Example 2 is different from the Example 6 only in that the starting material is titanyl phthalocyanine (TiOPc) alone but not the phthalocyanine mixed crystal.

In Comparative Example 2, 2 g of titanyl phthalocyanine were dissolved in 50 ml of sulfuric acid at 0°C. Next, the resulting acid solution was dropped into 500 ml of ethanol at 0°C, thereby forming a precipitate. Afterwards, the precipitate was filtered out and washed with plenty of ethanol until the filtrate became neutral. Thus, 11 g of a wet paste of titanyl phthalocyanine were obtained.

Next, the wet paste was put into 200 ml of dichloroethane kept at 25°C, by which the titanyl phthalocyanine was made to exist in the alcohol along with dichloroethane. Then, the dichloroethane solution containing the wet paste therein was mechanically stirred to continue this treatment for 5 hours.

After having carried out this treatment for 5 hours, the titanyl phthalocyanine was washed with methanol and then filtered out. Last, the titanyl phthalocyanine was dried at 60°C to obtain comparative phthalocyanine photosensitive material 2.

### 4.3 Comparative Example 3:

Comparative Example 3 is different from the Example 3 only in that the starting material is not the phthalocyanine mixed crystal but metal-free (hydrogen) phthalocyanine ($H_2Pc$) alone and that the wet paste is prepared by Method A.

In Comparative Example 3, metal-free phthalocyanine was dissolved in 50 ml of sulfuric acid at 0°C. Next, the resulting acid solution was dropped into 500 ml of water at 0°C, thereby forming a precipitate.
Afterwards, the precipitate was filtered out and washed with plenty of water until the filtrate became neutral. Thus, 16 g of a wet paste of metal-free phthalocyanine were obtained.

Next, the wet paste was put into 200 ml of tetrahydrofuran kept at 25°C, by which the metal-free phthalocyanine was made to exist in water along with tetrahydrofuran. Then, the tetrahydrofuran solution containing the wet paste therein was mechanically stirred to continue this treatment for 3 hours.

After having carried out this treatment for 3 hours, the metal-free phthalocyanine existing in the solution was washed with methanol and then filtered out. Last, the metal-free phthalocyanine was dried at 60°C to obtain comparative phthalocyanine photosensitive material 3.

### 4.4 Comparative Example 4:

Comparative Example 4 is outside the scope of the present invention in that the organic solvent used is not dichloroethane but acetonitrile (having a relative permittivity of 37.5).

In Comparative Example 4, 2 g of phthalocyanine mixed crystal 2 obtained in Production Example 2 of the foregoing item 2.2 were dissolved in 50 ml of sulfuric acid at 0°C. The resulting acid solution was dropped into 500 ml of water at 0°C, thereby precipitating the mixed crystal. Afterwards, the resulting precipitate was filtered out and washed with plenty of water until the filtrate became neutral. Thus, 15 g of a wet paste of phthalocyanine mixed crystal 2 were obtained.

Next, the wet paste was poured into 200 ml of acetonitrile kept at 25°C, by which phthalocyanine mixed crystal 2 was made to exist in water along with acetonitrile. Then, the acetonitrile solution containing the wet paste therein was mechanically stirred to continue this treatment for 3 hours.

After having carried out this treatment for 3 hours, the phthalocyanine mixed crystal existing in the solution was washed with methanol and then filtered out. Last, the phthalocyanine mixed crystal was dried at 60°C to obtain comparative phthalocyanine photosensitive material 4.

### 4.5 Comparative Example 5:

Comparative Example 5 is outside the scope of the present invention in that the starting material is not a phthalocyanine mixed crystal but a mixture prepared by merely mixing a single crystal of titanyl phthalocyanine (TiOPc) and a single crystal of metal-free phthalocyanine (H2Pc) at a mixing ratio of 8:2.

In Comparative Example 5, 2 g of a mixture that had been prepared by merely mixing titanyl phthalocyanine and metal-free phthalocyanine at a mixing ratio of 8:2 were put into 100 ml of water at 25°C. Next, this water into which the phthalocyanine mixture had been poured was set in a paint shaker and the mixture was dispersed therein over a period of 5 hours. Thus, 9 g of a wet paste of the mixture composed of titanyl phthalocyanine and metal-free phthalocyanine were obtained.

Next, the wet paste was poured into 200 ml of dichloroethane kept at 25°C, by which titanyl phthalocyanine and metal-free phthalocyanine were made to exist in water along with dichloroethane. Then, the dichloroethane solution containing the wet paste therein was set in a ball mill and milled therein to continue this treatment for 6 hours.

After having carried out this treatment for 6 hours, the titanyl phthalocyanine and the metal-free phthalocyanine existing in the solution were washed with methanol and then filtered out. Last, the titanyl phthalocyanine and the metal-free phthalocyanine were dried at 60°C to be comparative phthalocyanine photosensitive material 5.

The contents of the above-mentioned comparative examples are summarized in Table 2 below.

**Table 2**

| Comparative Example | Starting Matrial | Water (3) | Alcohol (4) | Organic solvent (4) | Temperature(°C) | Time (h) |
|---|---|---|---|---|---|---|
| 1 | TiOPc | A | | a, Dichloroethane | 25 | 3 |
| 2 | TiOPc | | A, Ethanol | a, Dichloroethane | 25 | 5 |
| 3 | H$_2$Pc | A | | a, THF | 25 | 3 |
| 4 | Mixed crystal 2 | A | | a, Acetonitrile | 25 | 3 |
| 5 | TiOP + H$_2$PC 8:2 | B | | a, Dichloroethane | 25 | 6 |

Regarding the addition of water or an alcohol to the starting material, the starting material was dissolved in sulfuric acid and dropped into water or an alcohol, thereby forming a precipitate as its wet paste in Method A of the Table 2; and the starting material was dispersed to form its wet paste, using a paint shaker, in Method B of the Table 2. Regarding the treatment of phthalocyanines with an organic solvent, mechanical stirring was effected in Method a of the Table 2; and ball milling was effected in Method b of the Table 2.

## 5. Evaluation:

The phthalocyanine photosensitive materials thus obtained in the above were evaluated in the manner mentioned below.

Precisely, 30 g of glass beads and 0.8 g of the phthalocyanine photosensitive material to be assessed were put into a composition that had been prepared by mixing 2.8 g of a polyester resin solution (ALMATEX P645; produced by Mitsui Toasu Chemicals, Inc.), 1 g of a melamin resin (UVAN 20HS; produced by Mitsui Toasu Chemicals, Inc.) and 14 g of cyclohexanone. These were dispersed for 6 hours, using a paint mixer, to obtain a photosensitive coating liquid. Next, the liquid was coated on an aluminum leaf having a thickness of 90 microns at a dry thickness of 15 microns, and this was left as it was at 120°C for one hour. In this manner, a photoreceptor was prepared.

Next, the photosensitive characteristic of the thus-obtained photoreceptor was determined in the manner mentioned below, using a photoreceptor testing device (Cynthia 55; produced by GENTEC Co.). First, the photoreceptor was charged at a voltage of +6.0 KV by corona charging and left as it was, whereupon the time (sec) before the bending point at which the surface potential of the thus-charged photoreceptor was suddenly lowered was measured and referred to as a dark attenuation time. The optical characteristic of the photoreceptor was defined as follows: Precisely, 780 nm-monochromatic rays each having a different optical intensity were separately applied to the corona-charged photoreceptor, and the optical attenuation time curve relative to each optical intensity (characteristic curve of the surface potential relative to the irradiation time) was obtained. The surface potential of the photoreceptor irradiated for a pre-determined period of time (0.075 seconds in this case) was obtained from the curve and plotted relative to each light energy applied thereto to give a gamma curve. The maximum value of the light energy by which the surface potential of the photoreceptor could be maintained almost on the same level as that by the initial charging was referred to as E1 (this means the light energy at the trailing edge point in the gamma curve); and the minimum value of the light energy by which the surface potential of the same could be lowered to about its rest potential (about 30 V) was referred as E2 (this means the light energy at the leading edge point in the gamma curve). The smaller E1 indicates a higher photosensitivity and a smaller difference $\Delta E$ (= E2 - E1) indicates a higher gamma value. Therefore, a photoreceptor having a smaller difference $\Delta E$ is more suitable as a digital input photoreceptor. In this test for assessing the photoreceptors prepared herein, those having 5 $\mu J/cm^2$ or smaller as $\Delta E$ were considered usable in digital input systems, while those having a larger value than 5 $\mu J/cm^2$ as $\Delta E$ were usable in analogue input systems.

The test results are shown in Table 3 below.

**Table 3**

| | Dark Attenuation Time (sec) | E (μJ/cm$^2$)$^1$ | E (μJ/cm$^2$)$^2$ | E$_2$-E$_1$ ΔE | Rest potential (V) |
|---|---|---|---|---|---|
| Example 1 | 80 | 1.0 | 5.0 | 4.0 | 15 |
| Example 2 | 30 | 0.2 | 0.5 | 0.3 | 20 |
| Example 3 | 40 | 0.2 | 0.6 | 0.4 | 25 |
| Example 4 | 40 | 0.3 | 0.7 | 0.4 | 25 |
| Example 5 | 35 | 0.4 | 0.9 | 0.5 | 25 |
| Example 6 | 15 | 0.3 | 1.4 | 0.9 | 20 |
| Example 7 | 10 | 0.2 | 0.4 | 0.2 | 20 |
| Example 8 | 30 | 0.2 | 0.5 | 0.3 | 30 |
| Example 9 | 40 | 0.3 | 0.7 | 0.4 | 30 |
| Example 10 | 18 | 0.2 | 1.4 | 1.2 | 30 |
| Exanple 11 | 30 | 0.7 | 3.2 | 2.5 | 25 |
| Example 12 | 50 | 1.0 | 4.0 | 3.0 | 20 |
| Example 13 | 40 | 0.8 | 3.0 | 2.2 | 25 |
| Example 14 | 20 | 0.5 | 1.8 | 1.3 | 20 |
| Example 15 | 10 | 0.5 | 2.5 | 2.0 | 20 |
| Comparative Example 1 | 10 | 0.2 | 36.5 | 36.3 | 150 |
| Comparative Example 2 | 8 | 0.8 | 49.6 | 48.8 | 200 |
| Comparative Example 3 | 12 | 2.0 | 30.0 | 28.0 | 120 |
| Comparative Example 4 | 2 | 0.2 | 30.8 | 30.6 | 100 |
| Comparative Example 5 | 10 | 0.2 | 33.3 | 33.1 | 120 |

As is obvious from Table 3 above, all the photoreceptor samples of the examples of the present invention had ΔE of less than 5 μJ/cm$^2$ and a rest potential of not higher than 30 V. From these, it is obvious that the products obtained in the examples of the present invention are excellent photosensitive materials usable in preparing digital input photoreceptors. As opposed to these, the photoreceptor samples of the comparative examples where the starting material used was not a phthalocyanine mixed crystal (Comparative Examples 1, 2, 3, 5) or where the organic solvent used had a relative permittivity of more than 20 (Comparative Example 4) each had a much larger ΔE value than 5 μJ/cm$^2$ and had a much larger rest potential. From these, it is obvious that the photosensitive materials prepared in these comparative examples are not suitable as those for digital input photoreceptors.

From the above, it is understood that the phthalocyanine mixed crystal as the starting material and the organic solvent having a relative permittivity of 20 or less are indispensable in preparing photosensitive materials for digital photoreceptors.

As mentioned in the above, when the phthalocyanine photosensitive materials prepared according to the present invention are formed into photosensitive layers and when light is applied thereto, the layers generate specific photocurrents. Specifically, the photocurrents generated passes digitally through the layers, depending on the intensity of the incident light relative to certain threshold values. Therefore, the phthalocyanine photosensitive materials of the present invention are suitable in digital input photoreceptors to be used in digital recording electrophotography.

In addition, even when an analogical light is applied to the photosensitive layer containing the phthalocyanine photosensitive material prepared according to the method of the present invention, the layer can output it as digital signal ,converting it by A/D conversion. Therefore, the photosensitive layer containing the phthalocyanine photosensitive material prepared according to the method of the present invention can also be used in conventional PPC (analogical input) photoreceptors, with which high-quality images having sharp edges can be realized.

While the invention has been described in detail and with reference to specific embodiments thereof, it will be apparent to one skilled in the art that various changes and modifications can be made therein without departing from the spirit and scope thereof.

## Claims

1. A method for producing a phthalocyanine photosensitive material, comprising the step of contacting phthalocyanine mixed crystals composed of at least two phthalocyanines selected from hydrogen phthalocyanine, copper phthalocyanine, titanyl phthalocyanine and vanadyl phthalocyanine with water and/or an alcohol and an organic solvent having a relative permittivity of 20 or less.

2. The method for producing a phthalocyanine photosensitive material according to claim 1, wherein said phthalocyanine mixed crystals are swollen by contact with water and/or an alcohol, before being brought into contact with said organic solvent.

3. The method for producing a phthalocyanine photosensitive material according to claim 2, wherein said phthalocyanine mixed crystals are contacted with an acid followed by dropping the resulting acid solution into water and/or an alcohol to cause precipitation of swollen mixed crystals.

4. The method for producing a phthalocyanine photosensitive material according to claim 2, wherein said phthalocyanine mixed crystals are swollen by dispersing them in water and/or an alcohol.

5. The method for producing a phthalocyanine photosensitive material according to claim 2, wherein said phthalocyanine mixed crystals are stirred in water and/or an alcohol so as to swell said phthalocyanine mixed crystals.